# EUROPEAN PATENT SPECIFICATION

(11) **EP 1 902 438 B1**
(45) Date of publication and mention of the grant of the patent: **13.01.2010**
(21) Application number: 06747474.2
(22) Date of filing: 30.05.2006
(51) Int. Cl.: G08G 1/09

(54) **PROVIDING TRAFFIC INFORMATION INCLUDING CURRENT TRAFFIC DATA FOR A LINK AND USING THE SAME**
BEREITSTELLUNG VON VERKEHRSINFORMATIONEN EINSCHLIESSLICH AKTUELLER VERKEHRSDATEN FÜR EINE VERBINDUNG UND VERWENDUNG DIESER
PROCEDE DE TRANSMISSION D'INFORMATIONS DE TRAFIC COMPRENANT DES DONNEES DE TRAFIC EN COURS DESTINEES A UNE LIAISON ET PROCEDE D'UTILISATION DE CELLES-CI

(30) Priority: 08.07.2005 US 697386 P; 13.07.2005 US 698481 P; 16.09.2005 KR 20050086887; 19.01.2006 US 759963 P
(43) Date of publication of application: 26.03.2008
(60) Divisional application: 09170601.0
(73) Proprietor: LG Electronics, Inc., Seoul 150-010 (KR)
(72) Inventor: KIM, Young In, 101-102 Brown-Stone Gwanak Apt., Seoul 151-052 (KR); JUNG, M.H, 615-701 Jeongdeunmaeul Woosung 6-danji, Gyeonggi-do 463-753 (KR); JOE, Moon Jeung, 903-1402 Mokryeon Shindongah Apt., Gyeonggi-do 431-776 (KR)
(74) Representative: Cabinet Plasseraud
(86) International application number: PCT/KR2006/002068
(87) International publication number: WO 2007/007953

(56) References cited:
- EP-A- 1 006 684
- EP-A- 1 445 750
- WO-A-00/39774
- JP-A- 11 160 081
- KR-A- 99 025 959
- KR-A- 2006 063 563
- KR-A- 2006 063 629
- KR-A- 2006 076 574

## Description

### 1. TECHNICAL FIELD

This disclosure relates to providing traffic information including traffic data for a link and using the same.

### 2. BACKGROUND ART

With the advancement in digital signal processing and communication - technologies, radio and TV broadcasts are being digitalized. Digital broadcasting enables provision of various information (e.g. , news, stock prices, weather, traffic information, etc.) as well as audio and' video content.

Reference WO 00/39774 discloses transmitting traffic information from a control center to a terminal in an optimized fashion with respect to the volume of data to be transmitted, and decoding transmitted traffic information pertaining to a highway network.

### 3. DISCLOSURE OFINVENTION

In one general aspect, a method for identifying traffic information according to claim 1 is provided.

Each message component structure includes an identifier specific to the type of information and the first identifier is an identifier, in the message component structure, specific to the current travel time amount for the particular link.

Implementations may include one or more additional features. For instance, determining current travel time information may include accessing received data corresponding to, among other items, results of measurements made with respect to traffic previously traversing the link, and computing an amount of travel time based on the received data. Determining current travel time information may involve accessing information provided within the received traffic data and recognizing that data as the amount of travel time.

The method may also include receiving information corresponding to a message management structure including information corresponding to a generation time of information reflected in the traffic data. The generation time included within the received message management structure may relate to a plurality, of message component structures that correspond to more than one of a predicted or current traffic tendency, a predicted or current amount of traffic, a predicted or current speed, or a predicted or current time to traverse a particular link.

Also, in the method, the current travel time information and the location information may be determined in a single step. The location information may be determined before the current travel time information is determined. Receiving traffic data may include decoding the traffic data such that the received traffic data is decoded traffic data. Receiving information corresponding to a current travel time amount may include receiving a value associated with a text description of an amount of travel time, and determining, with the received value, the text description. Receiving information corresponding to a current travel time amount may include receiving a current amount of travel time for the link including a text descriptor. The amount of time currently taken to traverse a particular link may reflect the current travel time amount.

Further, in the method, the amount of time currently taken to traverse the link may be reflected in a number of seconds. The amount of time currently taken to traverse the link may be reflected in a unit of time that is smaller than a second. The amount of time may be reflected in one or more bytes, each byte including a first portion of the byte which determines a value in terms of minutes and a second portion of the byte, consisting of five or less bits, which determines a number of tens of seconds. Receiving an amount of time may include receiving a flag value that determines whether associated data is in terms of either a first unit or a second unit. The first unit may be minutes and the second unit may be seconds. Receiving an amount of time may include receiving a flag value that determines whether associated data will include one or more additional packets of information. The flag value may indicate that the associated data will be delivered with a single additional byte.

In a further general aspect, an apparatus for identifying traffic information according to claim 14 is provided.

Implementations may include one or more additional features. For instance, in the apparatus, the processor may be configured to receive traffic data including information corresponding to aversion number of information reflected in the traffic data. The version number may be associated with a specific syntax of the data where any one of multiple syntaxes may be used.

Also, in the apparatus, the processor may be configured to receive information corresponding to a message management structure including information corresponding to a generation time of information reflected in the traffic data. The processor may be configured to receive information corresponding to a data length of the received data.

Further, in the apparatus, the processor may be further configured to determine the amount of travel time for a particular link only if the first identifier enables a determination that the traffic data relates to a current travel time for a particular link

The details of one or more implementations are set forth in the accompanying drawings and the description below. Other features will be apparent from the description and drawings, and from the claims.

### 4. BRIEF DESCRIPTION OF DRAWINGS

Fig. 1 illustrates a schematic diagram of a network through which traffic information is provided;
Fig. 2 illustrates a format of traffic information transmitted wirelessly;
Fig. 3 illustrates a structure of congestion and travel time information included in a CTT event container;
Figs. 4a through 4c illustrate average speed on a link, travel time for the link, and syntax for degree of congestion included in the status component of the CTT event container of Fig. 3;
Figs. 5a through 5c illustrate structures of a status component delivering average speed on a link;
Figs. 6a through 6e illustrate information structures for travel time for a link;
Fig. 7 illustrates a block diagram of a navigation terminal that receives traffic information transmitted from a server;
Figs. 8a and 8b illustrate examples of graphical user interfaces configured to display average speed on a link;
Fig. 9a illustrates an example of a graphical user interface configured to display average speeds on several links with a resolution that is more fine than, e.g., 1.8 km/h; and
Fig. 9b illustrates an example of a graphical user interface configured to display travel times for links.

### 5. MODES FOR CARRYING OUT THE INVENTION

One such use for digital broadcasts is to satisfy an existing demand for traffic information. Proposals that involve the use of digital broadcasts for this purpose contemplate the use of standardized formatting of traffic information to be broadcast. This approach may be used to enable the use of traffic information receiving terminals made by different manufacturers, whicheachcould be configured to detect and interpret traffic information broadcast in the same way.

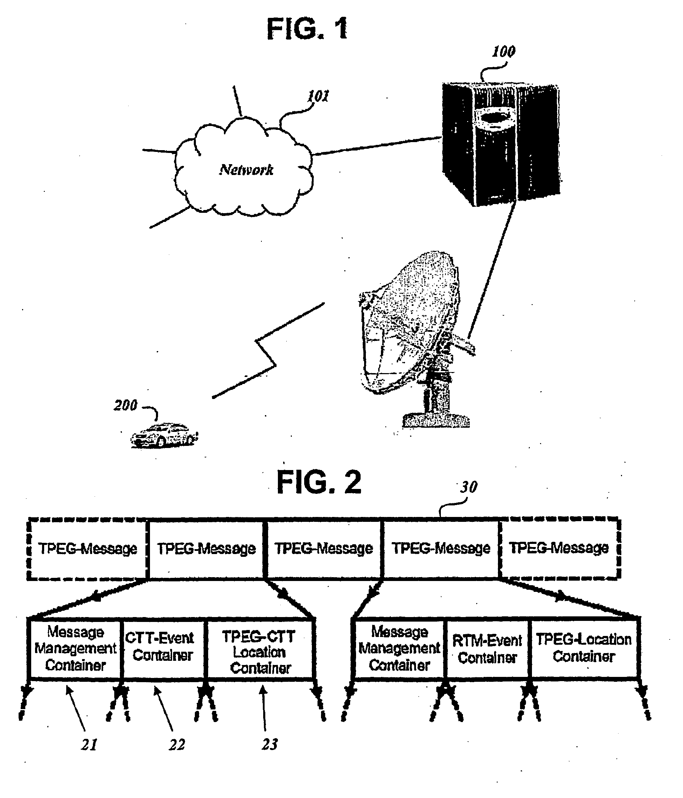

FIG. 1 is a schematic diagram of a network through which traffic information is provided. A traffic information providing server 100 in a broadcast station may transmit traffic information collected from various sources (e. g. , operator input, or information received from another server or probe cars through a network 101) wirelessly so that a traffic information receiving terminal (e.g., navigation system installed in a car 200) may receive the traffic information.

As shown in FIG. 2a, the traffic information wirelessly transmitted from the traffic information providing server 100 may be a sequence of TPEG-CTT (transport protocol expert group-congestion and travel-time Information) messages. A message segment of the sequence, i.e., a TPEG-CTT message, whose syntax is shown in FIG. 2b, may include a message management container 21, a CTT event container (or Application Event Container) 22, and TPEG-CTT location container 23. The TPEG-CTT message may also include different type of Containers other than, less than, or in addition to the CTT event container as in the TPEG-CTT message 30.

The message management container 21 may be used for managing date and time information. The time information may include message generation time (e.g., a chronological time indication) . The message generation time may be included in every TPEG-CTT message when the corresponding message is transmitted. The CTT event container 22 may include congestion and travel time status and predicted congestion and travel time status of links, i.e., road segments. The congestion and travel time status may include average link speed, link travel time, link delay, or congestion type, etc.

The TPEG-CTT location container 23 may employ various location reference processes. For example, a location reference process using a coordinate system or a location reference process using pre-promised links may be used. When a coordinate system is used, the coordinates (latitudes and longitudes) of the start and end positions of a link for which the TPEG-CTT message is created, may be transmitted. When a reference process using pre-promised links is used, a unique identification for a specific link on a receiving device may be transmitted. For example, a receiving device may include a locally stored network of links, wherein each link may be identified by a unique identifier. A link may refer to a road segment which starts and ends at junctions and has no junction in between. The coordinate systemmaybe the WGS 84 model. A text formatted name of the link may be transmitted.

In various implementations, a CTT event container and a TPEG-CTT location container, as illustrated in FIG. 2c, are composed of one or more CTT components 201. Each of CTT components may be constructed according to the syntax shown in FIG. 2d if it carries congestion status information while it may be constructed according to the syntax shown in FIG. 2e if the component carries location information.

A CTT event container 22 may be composed of one component or a plurality of CTT components. In various implementations, CTT components including an ID of 80h (notation 'h' means hexadecimal) or 84h includes one or more status components including basic traffic information such as the average link speed, link travel time, link delay, or congestion type. In the description, specific IDs are described as assignments to structures associated with specific information. The actual value of an assigned ID (e.g., 80h) is exemplary, and different implementations may assign different values for specific associations or circumstances.

In various implementations, CTT components including an ID of 81h include one or more status components including predicted CTT status. The predicted CTT status may include predicted average link speed, predicted link travel time, or congestion acceleration tendency. The congestion acceleration tendency may include information indicative of the tendency of congestion status. The congestion acceleration tendency will be described as a type of prediction information as the congestion status in the near future may be predicted from it.

In various implementations, the TPEG-CTT message may comprise CTT components structured as FIG. 2f to deliver additional information of traffic information. As shown, an identifier 8Ah may be assigned to the CTT component carrying additional information, and a language code that is indicative of language used for the additional information may also be included in the CTT component.

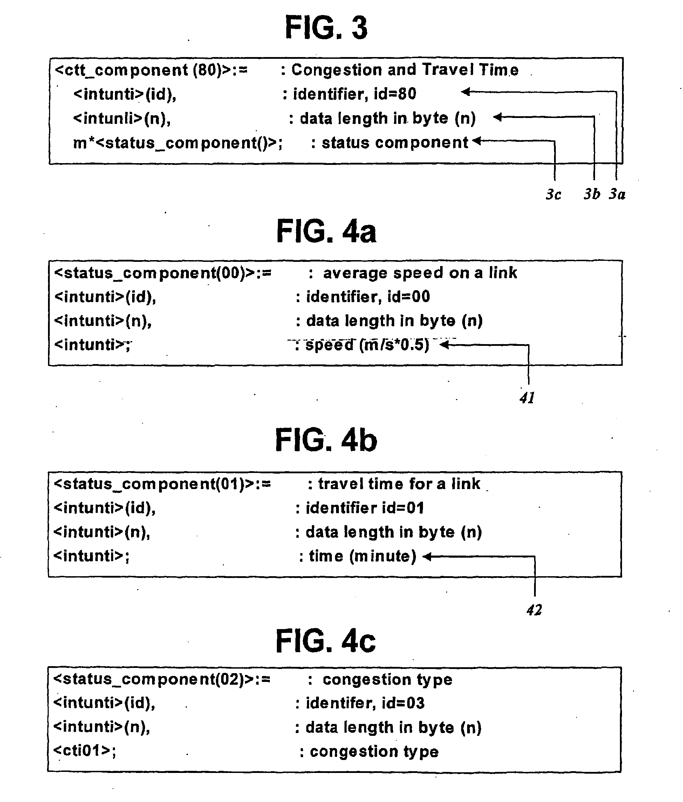

Fig. 3 illustrates a syntax, according to various implementations, of a structure of a congestion and travel time information component (hereinafter, referred to as CTT component) belonging to a CTT event container (e.g., at reference numeral 22 for Fig. 2). The Fig. 3 CTT component has an ID of '0x80' 3a, includes m status components 3c, and has a field expressed in byte 3b indicating the length of the whole data of the status components included therein.

Status components may, for example, use 8 bits to transfer average speed on a link, travel time for a link, and/or information about degree of congestion in a format illustrated in Figs. 4a through 4c. In one implementation, an ID of '00' is assigned to average speed on a link; an ID of '01' is assigned to travel time for a link; and an ID of '03' is assigned to degree of congestion.

A numeric value expressed in units such as, for example, of 0.5 m/s (namely, 1.8 km/h) may be carried in the field 41 for average speed on a link (' intunti' denotes size of byte) and a numeric value expressed in units such as, for example, minutes is carried in the field for travel time for a link 42. Information about travel time for a link may be obtained by retrieving the link length from a link information (e.g., link length, link width, etc.) database constructed in the server 100 and dividing the link length by average speed on the corresponding link obtained from traffic information collected fromvarious sources, beingprovided after further rounding off to the units of minute (e.g., a travel time exceeding 30 seconds is rounded off to one minute).

In one implementation, if average speed on a link is transmitted in the units of 0.5 m/s (1.8 km/h), the allowable range of the speed in 8-bit expression may amount to 0 ~ 459 km/h. Since it may be unnecessary to express the average speed up to a very high value (e.g. , beyond 200 km/h), it may be better to consider a very high speed (e.g., average speed higher than 200 km/h) to be resulting from drivers speeding in the corresponding link rather than current traffic condition. Accordingly, from a view point of providing traffic congestion information, it may be useless to provide information indicating up to a very high speed.

On the other hand, in the case of traffic congestion, even 1 km/h difference in the average speed may be an important factor for a driver to choose a particular route. In this respect, a resolution of 1.8 km/h cannot discriminate 1 km/h difference in the average speed. Therefore, when average speed on a link becomes low, the average speed information expressed in units of 0.5 m/s (= 1.8 km/h) may not satisfy drivers requirement on the degree of resolution.

Similarly, if travel time for a link is provided in units of minute, round-off error may become large when the length of the link is short. For example, if the link length is 500 meters and average speed on the link is 20 m/s (= 72 km/h), travel time for the link will become 25 seconds; if the link length is 1000 meters and average speed on the link is 20 m/s, travel time for the link will become 50 seconds; for another example, if the link length is 2900 meters and average speed on the link is 20 m/s, travel time for the link will be 145 seconds. In these cases, the travel time for the link delivered to the status component corresponds to 0, 1, and 2 minutes, respectively; therefore, the difference between actual travel time and the travel time provided by traffic information amounts to 25, 10, and 25 seconds. These errors may become more prominent in links of short lengths.

Therefore, in various implementations, as to the delivery of information about average speed on a link, the maximum speed is lower than may be introduced to improve resolution in low speed links. Likewise, as to the delivery of information about travel time for a link, information expressed in units of seconds may be permitted. an 8 bit representation may be employed for delivering information about travel time for a link expressed in units of seconds; however, additional bits may also be assigned to deliver the information expressed in units of second.

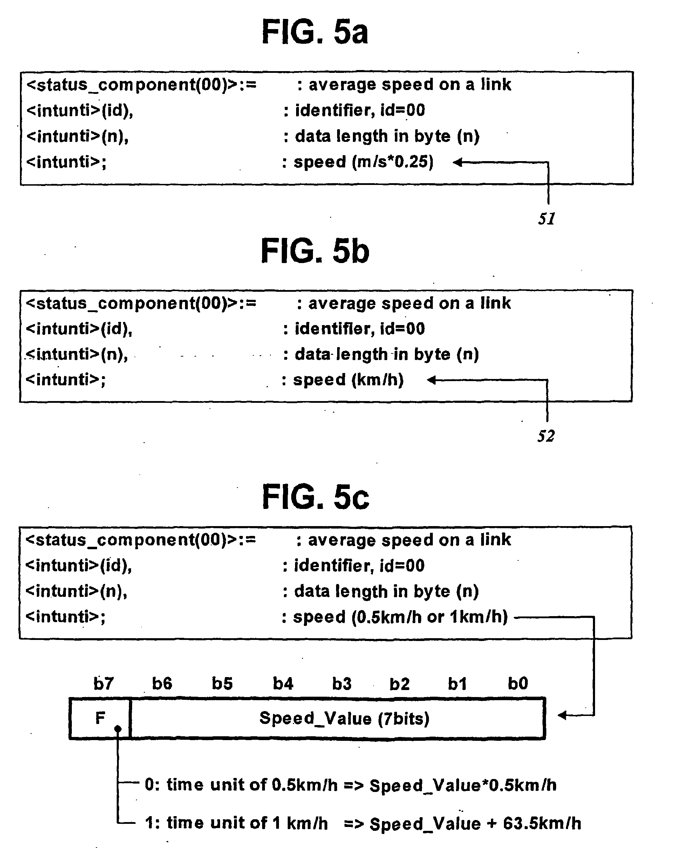

As shown in Fig. 5a, in one implementation, the following format for delivering information about average speed on a link may be employed: 0.25 m/s (= 0.9 km/h) . By using the speed unit, the maximum speed that an 8-bit field indicative of average speed 51 may represent becomes 229.5 km/h.

The unit of 0.25 m/s is only an arbitrary example; therefore, in order to increase the speed resolution in a link of slow speed, a much lower unit, for example, 0.2 m/s (the maximum allowable speed for representation is 183.6 km/h) or 0.15 m/s (the maximum allowable speed for representation is 137.7 km/h) may be employed. Increasing speed resolution by lowering the speed unit is advantageous for the cases where traffic regulations restrict the maximum speed (e.g., to 110 km/h).

As shown in Fig. 5b, average speed on a link may also be provided in units of 1 km/h. According to this implementation, the allowable range that the field indicative of average speed 52 may represent becomes 0 ~ 255 km/h and figures below a decimal point do not occur. Although the maximum speed allowable for representation is decreased in the implementation of Fig. 5b compared with the example of Fig. 4a (459 km/h → 255 km/h), the speed resolution is improved by 0.8 km/h (1.8 km/h → 1 km/h).

The speed resolution may play an important role depending on the magnitude of the average speed on the current link. As described earlier, when the average speed on a link is low, a driver may respond sensitively to a slight change of the average speed, whereas the driver may show lower sensitivity against a slight change of the average speed if the average speed on the link is high. Therefore, in various implementations , a variable speed unit may be employed in accordance with the magnitude of the average speed. Fig. 5c illustrates an example of a structure of the average speed field of a status component according to one implementation. The most significant bit (F) designates a speed unit on which the average speed represented by the remaining 7 bits (Speed_Value) is based. For example, if the most significant bit (F) is 0, it implies that the value carried by the remaining 7 bits (Speed_Value) corresponds to the average speed expressed in units of 0.5 km/h; when the most significant bit (F) is 1, the value carried by the remaining 7 bits (Speed_Value) corresponds to the average speed expressed in units of 1 km/h.

In the implementation of Fig. 5c, since the maximum speed that may be expressed in 0.5 km/h unit is 63.5 km/h (= 127*0.5 km/h), when the most significant bit (F) is 1, the average speed amounts to the sum of what the remaining 7 bits represent and 63.5 km/h. As to a high speed value, an integer value of 63 km/h may be added instead of 63.5 km/h. For example, if the average speed field is 1:0001100, the average speed to be delivered will be 759.5 km/h (= 12 km/h + 63.5 km/h) or 759 km/h (= 12 km/h + 63 km/h).

Specifying the speed resolution with the two different units of 0.5 km/h and 1 km/h in the implementation of Fig. 5c is only an example; a different resolution from the specified unit may be employed. Therefore, a variable resolution depending on the magnitude of the average speed on a link should be considered to fall within the scope , even though an employed speed resolution may be different from what is described in this disclosure.

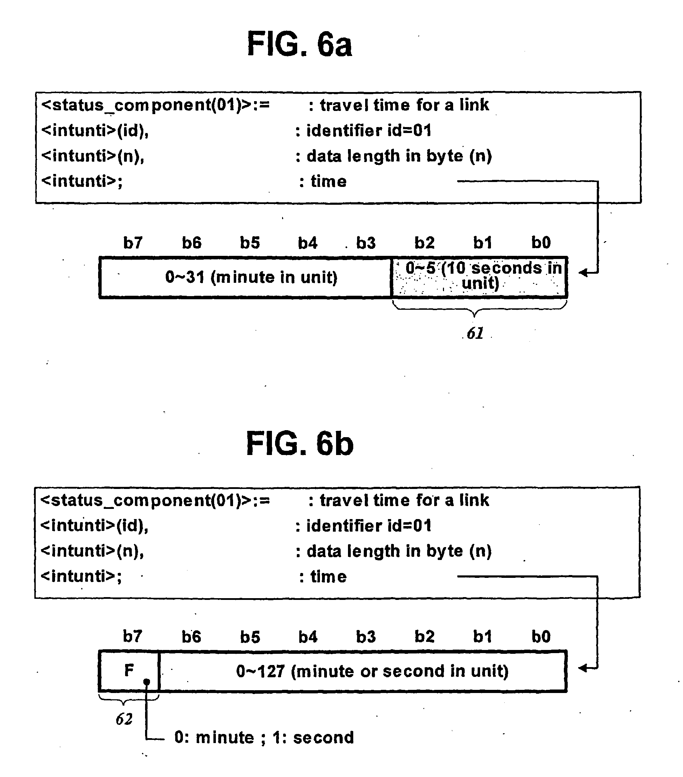

An implementation of a format delivering information about travel time for a link is illustrated in Figs. 6a through 6d.

In the implementation of Fig. 6a, the higher 5 bits of 8 bits are reserved for minutes and lower 3 bits 61 are reserved for seconds. Since the allowable range that the lower 3 bits can express is from 0 to 7, the lower 3 bits 61 records the value of tens of the element expressed in second from the travel time for a link. That is to say, from the three examples described earlier, since the travel time for the link is 25, 50, and 145 seconds (2 minutes and 25 seconds), the lower 3 bits 61 records 3 (which corresponds to 30---5 seconds are rounded off), 5 (which corresponds to 50), and 3 (which corresponds to 30) ; the higher 5 bits records 0, 0, and 2, respectively. In the present implementation, respective errors become 5,0, and 5 seconds and relative error magnitudes are reduced to 20% (= 5/25), 0% (= 0/10), and 20% (= 5/25), being reduced to 13.3% on the average compared with the case expressed in minute.

In the implementation of Fig. 6b, the time unit for the 8 bit expression is varied as needed. More specifically, lower 7 bits are reserved to represent travel time for a link in units of minute or second; the most significant bit 62 is used as a flag to designate whether the content recorded in the 7 bits is measured in units of minute or second. When the content is expressed inminute, 0 is assigned, whereas 1 is assigned when the content is expressed in second. Since the travel time for the link is 25, 50, and 145 seconds from the previous three examples, 10011001 (flag = 1), 10110010 (flag = 1), and 00000010 (flag = 0) (= 2 minutes) or 11111111 (flag = 1) (= 127 seconds) are recorded in the 8 bits, respectively. In the present implementation, respective errors become 0, 0, and 25 seconds (or 18 seconds) and relative error magnitudes are 0%, 0%, and 100% (or 72%), being reduced to 33.3% (or 24%) on the average compared with the case expressed in minute.

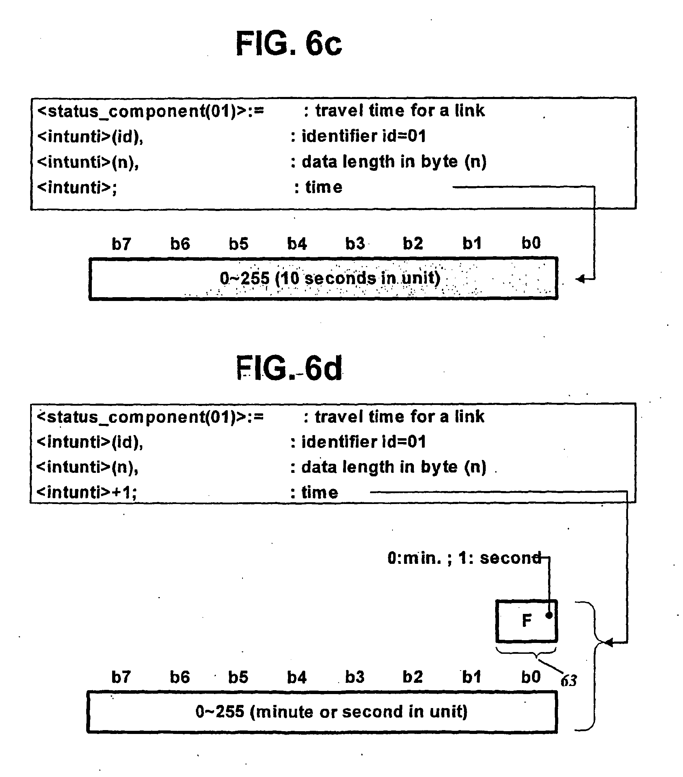

In the implementation of Fig. 6c, the entire 8 bits are used to record travel time for a link, the recording unit being less than 60 seconds and larger than 1 second (e.g., 10 seconds). Since the travel time for the link is 25, 50, and 145 seconds from the previous three examples, 3 (5 seconds are rounded off), 5, and 15 are each recorded in the 8 bits according to the implementation of Fig. 6c. In the present implementation, respective errors become 5, 0, and 5 seconds and relative error magnitudes are 20%, 0%, and 20%, being reduced to 13.3% on the average compared with the case expressed in minute. Although the present implementation shows identical results to those from the implementation of Fig. 6a, the maximum time allowable for expressing travel time for a link is 2550 seconds (4 minutes and 30 seconds), thereby being larger than 31 minutes and 50 seconds of the implementation of Fig. 6a.

Additional bits may be assigned through a mechanism such as that shown by Fig. 6d. Fig. 6d is an implementation where a flag of one bit denoting time unit is appended.

In the implementation of Fig. 6d, the entire 8 bits are reserved for travel time for a link and an additional one bit flag 63 (e.g., this-flag is set to 0 when the time unit corresponds to minute, whereas it is 1 when the time unit is second) is so assigned as to specify whether the time recorded in the 8 bits is expressed in minute or second. Since the travel time for the link is 25, 50, and 145 seconds from the previous three examples, 1:8 bits (flag: data) according to the implementation of Fig. 6d holds 1:00011001, 1:00110010, and 1:10010001, respectively. The error from each case becomes 0 in the present implementation, the error rate being reduced by 100 % compared with the case expressed in minute.

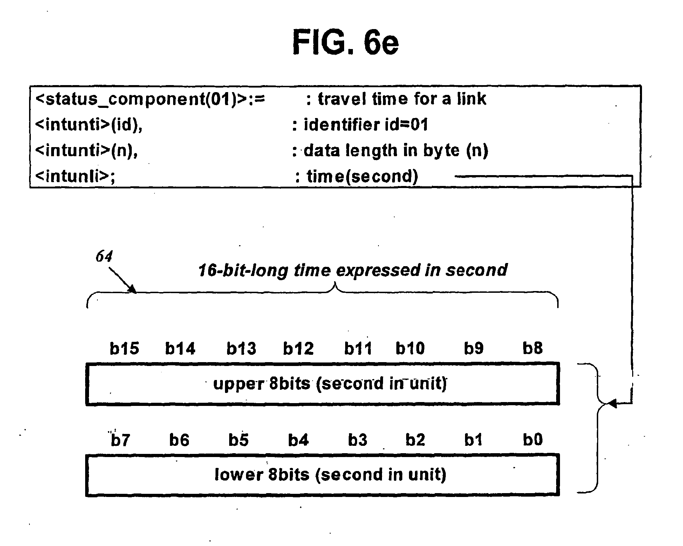

When the additional one bit does not make up 8 bits in such a way that effective information is carried in the other constituting 7 bits, the 7 bits may be wasted for the sake of simplicity for information processing. Therefore, when effective information is not included in the constituting 7 bits and thus delivered to the status component (ID 0x01), it may be useful to deliver the travel time for a link by 16 bits rather than to additionally deliver the one bit flag only, as shown in Fig. 6e ('intunti' in Fig. 6e denotes size of 16 bits). In the implementation of Fig. 6e, the entire 16 bits represent the travel time for the link 64 expressed wholly in second. In the implementation of Fig. 6e where the entire 16 bits are used to express travel time for a link, the maximum allowable time becomes 18 hours 12 minutes and 16 seconds. This representation capacity can accommodate travel time for a link for nearly all links without error.

The implementations of Figs. 6a through 6c, where travel time for a link is expressed with 8 bits, have improved features compared with the case where the 8 bits are used to express the travel time for the link in units of minute only. However, for the implementations of Figs. 6a and 6c, since the maximum allowable time for each case is 31 minutes and 50 seconds; and 42 minutes and 30 seconds, respectively, if a part of the link gets congested and travel time thus becomes elongated, a case where information delivery fails may happen due to the inability to represent the travel time for the link. For the implementation of Fig. 6b, a problem exists that as for the travel time for a link exceeding 127 seconds, an error happens identically to the case where the travel time for a link is delivered in units of minute. It may be particularly advantageous to employ the Fig. 6c-6e solutions when a larger range or.a more precise range is required.

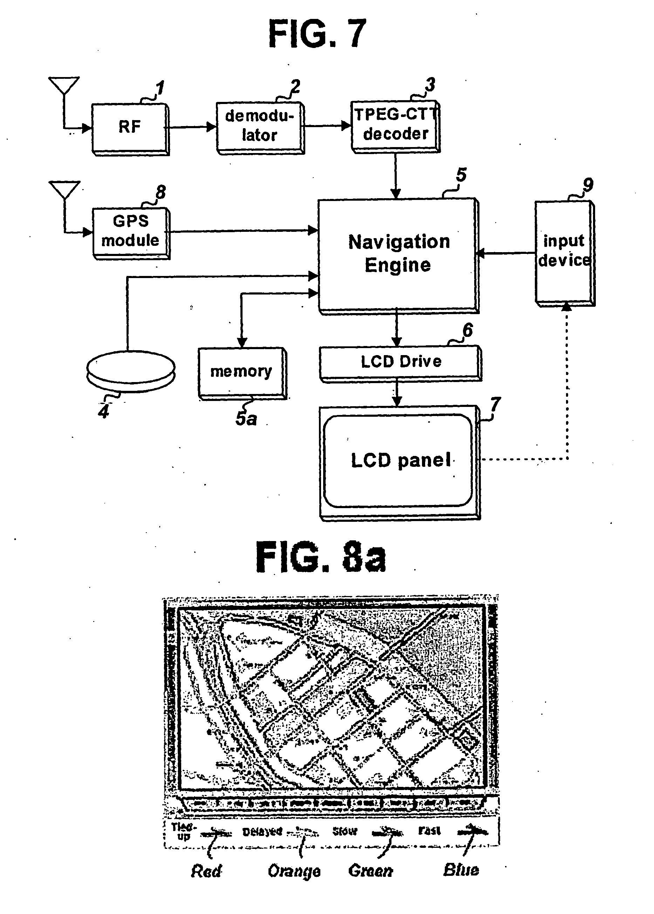

Fig. 7 is an exemplary block diagram of a navigation terminal that receives traffic information transmitted from the server 100. Figs. 7-9b illustrate a system and graphical user interfaces appearing in exemplary implementations of systems for receiving and utilizing traffic information. Other systems may be organized differently or include different components.

The navigation terminal comprises a tuner 1 for receiving modulated traffic information signals by resonating at the required frequency band, a demodulator 2 for outputting traffic information signals by demodulating the modulated signals from the tuner 1, a TPEG-CTT decoder 3 for obtaining traffic information by decoding the demodulated traffic information signals, a GPS module 8 for calculating the current position (i.e., latitude, longitude, and altitude) by receiving signals from a plurality of satellites, storage structure 4 for storing various graphic data and an electronic map including information on links and nodes, an input unit 9 for receiving user input, a navigation engine 5 for controlling screen display based on the user input, the current position, and obtained traffic information, a memory 5a for storing data temporarily, an LCD panel 7 for displaying data, and an LCD drive 6 for driving the LCD panel 7 according to data to be presented. The input unit 9 may be a touch screen incorporated into the LCD panel 7.

The tuner 1 tunes to the frequency of the signals transmitted by the server 100 and the demodulator 2 demodulates the tuned signals in a predetermined manner. The TPEG-CTT decoder 3 decodes the input demodulated signals into a TPEG message sequence as shown in Fig. 2, interprets each TPEG message in the sequence, and then delivers necessary information and/or control signals according to the content of the message to the navigation engine 5. Though various kinds of information are provided for the navigation engine 5 by the TPEG-CTT decoder 3, for purposes of brevity, the following description focuses on the processing procedure thereof.

The TPEG-CTT decoder 3 extracts data/time and message occurrence time included in the message management container of each TPEG-CTT message and determines if the following container is a CTT event container based on 'message element' information (i.e. an identifier). If it is determined that the following container is a CTT event container, the TPEG-CTT decoder 3, by extracting each CTT component and the status component included in the CTT component, provides the navigation engine 5 with the information obtained from the container so that the navigation engine 5 can display congestion and travel time information, which will be described below. Providing the navigation engine 5 with the information may include determining, based on identifiers, that the traffic information includes a message management container including status information within various message components within the message management container. The components may each include different status information associated with different links or locations and identifiers associated with the different status information. The containers and components may each include information associated with a generation time, version number, data length, and identifiers of included information.

The TPEG-CTT decoder 3 then obtains information on the link location about which the previously obtained information is created from the following TPEG-CTT location container. The position information may be, for example, coordinates (i.e., latitudes and longitudes) of the start and end positions or a link ID, depending on the type of the TPEG-CTT location container. If the navigation terminal is equipped with the storage structure 4, the navigation engine 5 finds the link location about which the received information is created with reference to information on each link and node stored in the storage structure 4. The navigation engine 5 may convert the coordinates of the link into the link ID or vice versa.

The navigation engine 5 reads a part of the electronic map centered around the position coordinates received from the GPS module 8 from the storage structure 4 and displays the map on the LCD panel 7 via the LCD drive 6. A particular graphic symbol is displayed at the location corresponding to the current position on the LCD panel 7.

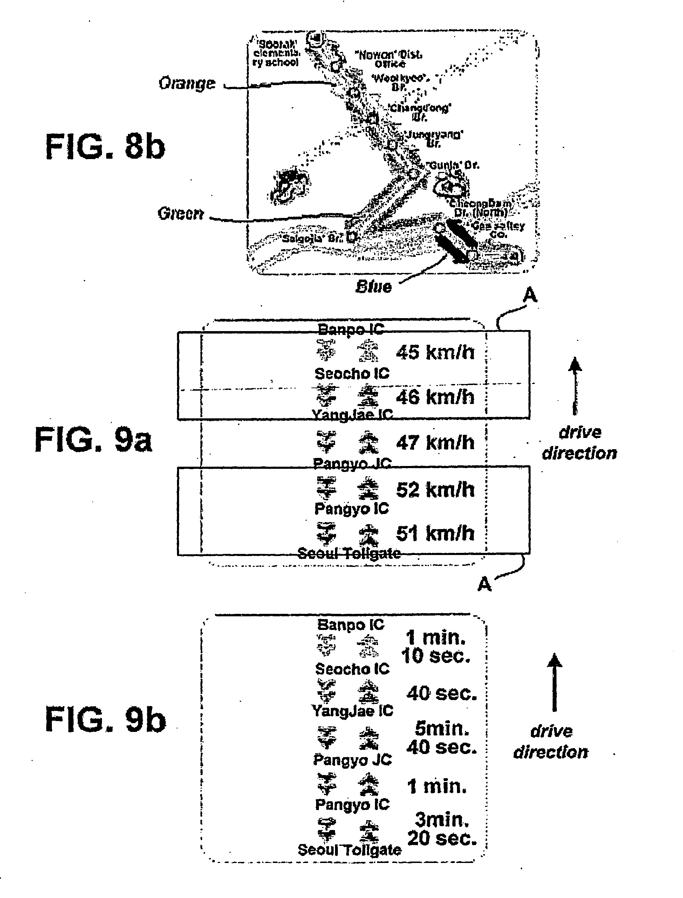

The navigation engine 5 displays the average speed on a link received from the TPEG-CTT decoder 3 at a location corresponding to the coordinates or link ID delivered via the TPEG-CTT location container following the container delivering the average speed information. As shown in Fig. 8a (map-type display) and8b (graph-type display), the display method uses different colors according to the average speed on a link. (e.g., red, orange, green, and blue colors indicate average speeds of 0 ~ 10 km/h, 10 ~ 20 km/h, 20 ~ 40 km/h, and over 40 km/h, respectively). If a driver requests the display of the average speeds in the links along a driving route, the navigation engine 5 may show the average speed information corresponding to the links in the front of the current driving route (or the links that belong to a driving route if the route has been predetermined) from among the average speed information received from the TPEG-CTT decoder 3 in the graphic display as shown in Fig. 9a. If a driver requests the display of travel time for the links along a driving route, the navigation engine 5 may show the travel time information corresponding to the links in the front of the current driving route (or the links that belong to a driving route if the route has been predetermined) from among the travel time information of the links received from the TPEG-CTT decoder 3 in the graphic display as shown in Fig. 9b.

Fig. 9a illustrates an example when average speed on a link is delivered with a resolution finer than 1.8 km/h (e.g., the implementations of Figs. 5a through 5c), the average speed is displayed on the LCD panel 7 by the value included in the corresponding field according to the predetermined resolution (1 km/h in Fig. 5b). Since the resolution is 1 km/h, difference in the average speed between two neighboring links is expressed in 1 km/h resolution (the area marked with 'A') or a multiple of the resolution. If average speed information expressed in another predetermined resolution (0.9 km/h in Fig. 5a or 0. 5 km/h and 1 km/h in Fig. 5c) is received, the average speed is obtained by multiplying the received information by the predetermined resolution and difference in the average speed between two neighboring links becomes a multiple of the resolution.

Fig. 9b illustrates an example when travel time for a link is provided along with information expressed in units of seconds (e.g., implementations of Figs. 6a through 6e), the information in units of seconds is also displayed on the LCD panel 7. If time information expressed only in units of seconds is received, the received travel time for the link may be converted to the format of units of minutes: units of seconds when needed.

The average speed or travel time for the link may be displayed on the map such as shown in Fig. 8a along a forward direction or at predetermined links.

In the implementations of Figs. 5a and 5c, even though the average speed on a link may show a difference below 1 km/h, since the numeric value of the average speed is displayed separately on the screen, a driver, based on the displayed information or on the travel time which is the length of the corresponding link divided by the average speed including the same resolution, may choose a link to drive through.

According to one implementation for a simplified display, according to the user's choice, average speed on a linkmaybe displayed after throwing away the place values below decimal point. Similarly, as to travel time, only the element in minute maybe kept and displayed, the element in second being discarded.

Since the travel time for a link within a decoded status component (ID=01) may have information expressed in units of seconds when the TPEG-CTT decoder 3 delivers the travel time to the navigation engine 5, the TPEG-CTT decoder 3 may deliver two-byte information to the navigation engine 5 either by allocating one byte to each of minute and second or by converting the travel time to seconds. (When 16 bit information expressed in units of seconds is received, the information is delivered as received.) Therefore, when the server 100 also provides travel time for a link as the information expressed in units of seconds (e.g., the implementations of Figs. 6a through 6e), the TPEG-CTT decoder 3 enables the navigation engine 5 to express the travel time for the link down to seconds; when an automated path finding function is provided, the TPEG-CTT decoder 3 enables the navigation engine 5 to find the shortest path by using the travel time for the links including the resolution in second.

If the terminal in Fig. 7 is equipped with a voice output means, the terminal may output received average speed information or travel time for a specified link or links included in a driving route in voice.

The foregoing description has been presented for purposes of illustration. Thus, various implementations with improvements, modifications, substitutions, or additions within the scope as defined by the following appended claims.

## Claims

1. A method for identifying traffic data, the method comprising:
receiving the traffic data including a current travel time information for a particular link, a first identifier and a location information corresponding to a location associated with the particular link, and information corresponding to a message management structure (21) including information corresponding to a generation time of the message management structure comprising a plurality of message component structures, wherein each message component structure further comprises an identifier specific to the type of information and the first identifier is an identifier, in a message component structure, specific to the current travel time information for the particular link;
determining the current travel time information based on the information included in the received traffic data;
determining the location information based on the information in the received traffic data corresponding to the location associated with the particular link; and
identifying the traffic data based on the determined current travel time information and the determined location information.

2. The method of claim 1, wherein determining current travel time information includes accessing received data corresponding to, among other items, results of measurements made with respect to traffic previously traversing the link, and computing an amount of travel time based on the received data.

3. The method of claim 1, wherein determining current travel time information involves accessing information provided within the received traffic data and recognizing that data as the current travel time information for the particular link.

4. The method of anyone of claims 1 through 3, wherein the generation time included within the received message management structure relates to a plurality of message component structures that correspond to more than one of a predicted or current traffic tendency, a predicted or current amount of traffic, a predicted or current speed, or a predicted or current time to traverse a particular link.

5. The method of anyone of claims 1 through 4, wherein the current travel time information and the location information are determined in a single step.

6. The method of anyone of claims claim 1 through 5, wherein receiving information corresponding to the current travel time information includes receiving a value associated with a text description of an amount of travel time, and determining, with the received value, the text description.

7. The method of anyone of claims 1 through 6, wherein the current travel time information is reflected in a number of seconds.

8. The method of anyone of claims 1 through 6, wherein the current travel time information is reflected in a unit of time that is smaller than a second.

9. The method of anyone of claims 1 through 8, wherein the current travel time information is reflected in one or more bytes, each byte including a first portion of the byte which determines a value in terms of minutes and a second portion of the byte, consisting of five or less bits, which determines a number of tens of seconds.

10. The method of anyone of claims 1 through 9, wherein receiving the current travel time information includes receiving a flag value that determines whether associated data is in terms of either a first unit or a second unit.

11. The method of claim 10, wherein the first unit is minutes and the second unit is seconds.

12. The method of anyone of claims 1 through 11, wherein receiving the current travel time information includes receiving a flag value that determines whether associated data will include one or more additional packets of information.

13. The method of claim 12, wherein the flag value indicates that the associated data will be delivered with a single additional byte.

14. An apparatus for identifying traffic data, the apparatus comprising:
an interface configured to receive the traffic data including a first identifier, information corresponding to a current travel time for a particular link, and a location information corresponding to a location associated with the particular link, and information corresponding to a message management structure comprising a plurality of message component structures (21) including information corresponding to a generation time of the message structure, wherein each message component structure further comprises an identifier specific to the type of information and the first identifier is an identifier, in a message component structure, specific to information corresponding to the current travel time for the particular link; and
a processor configured to:
determine the current travel time information based on the information included in the received traffic data; determine the location information based on the information in the received traffic data corresponding to the location associated with the particular link; and,
identify the traffic data based on the determined current travel time information and the determined location information.

15. The apparatus of claim 14, wherein the processor is configured to receive traffic data including information corresponding to a version number of information reflected in the traffic data, wherein the version number is associated with a specific syntax of the data where any one of multiple syntaxes may be used.

16. The apparatus of claim 14 or 15, wherein the processor is configured to receive information corresponding to a data length of the received data.

17. The apparatus of anyone of claims 14 through 16, wherein the current travel time information is reflected in a unit of time that is not greater than a second, and the amount of time is contained in two bytes (64).

## Patentansprüche

1. Verfahren zum Identifizieren von Verkehrsdaten, wobei das Verfahren aufweist:
Empfangen der Verkehrsdaten, die gegenwärtige Fahrzeitinformationen für eine bestimmte Verbindung, eine erste Kennung und Ortsinformationen, die einem Ort entsprechen, der mit der bestimmten Verbindung verknüpft ist, und Informationen umfassen, die einer Nachrichtenverwaltungsstruktur (21) entsprechen, die Informationen umfaßt, die einer Erzeugungszeit der Nachrichtenverwaltungsstruktur entsprechen, die mehrere Nachrichtenkomponentenstrukturen aufweist, wobei jede Nachrichtenkomponentenstruktur ferner eine Kennung aufweist, die für die Art der Informationen spezifisch ist, und die erste Kennung eine Kennung in einer Nachrichtenkomponentenstruktur ist, die für die gegenwärtigen Fahrzeitinformationen für die bestimmte Verbindung spezifisch ist;
Feststellen der gegenwärtigen Fahrzeitinformationen beruhend auf den Informationen, die in den empfangenen Verkehrsdaten enthalten sind;
Feststellen der Ortsinformationen beruhend auf den Informationen in den empfangenen Verkehrsdaten, die dem Ort entsprechen, der mit der bestimmten Verbindung verknüpft ist; und
Identifizieren der Verkehrsdaten beruhend auf den festgestellten gegenwärtigen Fahrzeitinformationen und den festgestellten Ortsinformationen.

2. Verfahren nach Anspruch 1, wobei das Feststellen der gegenwärtigen Fahrzeitinformationen das Zugreifen auf empfangene Daten, die unter anderem Ergebnissen von Messungen entsprechen, die bezüglich des Verkehrs gemacht wurden, der vorher die Verbindung durchquerte, und das Berechnen eines Fahrzeitbetrags beruhend auf den empfangenen Daten umfaßt.

3. Verfahren nach Anspruch 1, wobei das Feststellen der gegenwärtigen Fahrzeitinformationen das Zugreifen auf Informationen, die innerhalb der empfangenen Verkehrsdaten bereitgestellt werden, und das Erkennen von Daten als die gegenwärtigen Fahrzeitinformationen für die bestimmte Verbindung umfaßt.

4. Verfahren nach einmem der Ansprüche 1 bis 3, wobei die Erzeugungszeit, die innerhalb der empfangenen Nachrichtenverwaltungsstruktur enthalten ist, mehrere Nachrichtenkomponentenstrukturen betrifft, die mehr als einer einer vorhergesagten oder gegenwärtigen Verkehrstendenz, einem vorhergesagten oder gegenwärtigen Verkehrsbetrag, einer vorhergesagten oder gegenwärtigen Geschwindigkeit, oder einer vorhergesagten oder gegenwärtigen Zeit entsprechen, eine bestimmte Verbindung zu durchfahren.

5. Verfahren nach einem der Ansprüche 1 bis 4, wobei die gegenwärtigen Fahrzeitinformationen und die Ortsinformationen in einem einzigen Schritt festgestellt werden.

6. Verfahren nach einem der Ansprüche 1 bis 5, wobei das Empfangen von Informationen, die den gegenwärtigen Fahrzeitinformationen entsprechen, das Empfangen eines Werts, der mit einer Textbeschreibung eines Fahrzeitbetrags verknüpft ist, und das Feststellen, mit dem empfangenen Wert, der Textbeschreibung umfaßt.

7. Verfahren nach einem der Ansprüche 1 bis 6, wobei die gegenwärtigen Fahrzeitinformationen in einer Anzahl von Sekunden wiedergegeben werden.

8. Verfahren nach einem der Ansprüche 1 bis 6, wobei die gegenwärtigen Fahrzeitinformationen in einer Zeiteinheit wiedergegeben werden, die kleiner als eine Sekunde ist.

9. Verfahren nach einem der Ansprüche 1 bis 8, wobei die gegenwärtigen Fahrzeitinformationen in einem oder mehreren Bytes wiedergegeben werden, wobei jedes Byte einen ersten Abschnitt des Bytes, der einen Wert in Form von Minuten festlegt, und einen zweiten Abschnitt des Bytes umfaßt, der aus fünf oder weniger Bits besteht, der eine Anzahl von Dutzenden von Sekunden festlegt.

10. Verfahren nach einem der Ansprüche 1 bis 9, wobei das Empfangen der gegenwärtigen Fahrzeitinformationen das Empfangen eines Merkerwerts umfaßt, der festlegt, ob die verknüpften Daten entweder in Form einer ersten Einheit oder einer zweiten Einheit vorliegen.

11. Verfahren nach Anspruch 10, wobei die erste Einheit Minuten ist und die zweite Einheit Sekunden ist.

12. Verfahren nach einem der Ansprüche 1 bis 11, wobei das Empfangen der gegenwärtigen Fahrzeitinformationen das Empfangen eines Merkerwerts umfaßt, der festlegt, ob die verknüpften Daten ein oder mehrere zusätzliche Informationspakete enthalten werden.

13. Verfahren nach Anspruch 12, wobei der Merkerwert anzeigt, daß die verknüpften Daten mit einem einzigen zusätzlichen Byte geliefert werden.

14. Vorrichtung zum Identifizieren von Verkehrsdaten, wobei die Vorrichtung aufweist:
eine Schnittstelle, die konfiguriert ist, die Verkehrsdaten zu empfangen, die eine erste Kennung, Informationen, die einer gegenwärtigen Fahrzeit für eine bestimmte Verbindung entsprechen, und Ortsinformationen, die einem Ort entsprechen, der mit der bestimmten Verbindung verknüpft ist, und Informationen umfassen, die einer Nachrichtenverwaltungsstruktur (21) entsprechen, die Informationen umfaßt, die einer Erzeugungszeit der Nachrichtenverwaltungsstruktur entsprechen, die mehrere Nachrichtenkomponentenstrukturen aufweist, wobei jede Nachrichtenkomponentenstruktur ferner eine Kennung aufweist, die für die Art der Informationen spezifisch ist, und die erste Kennung eine Kennung in einer Nachrichtenkomponentenstruktur ist, die für Informationen spezifisch ist, die der gegenwärtigen Fahrzeit für die bestimmte Verbindung entsprechen; und
einen Prozessor, der konfiguriert ist, um:
die gegenwärtigen Fahrzeitinformationen beruhend auf den Informationen festzustellen, die in den empfangenen Verkehrsdaten enthalten sind; die Ortsinformationen beruhend auf den Informationen in den empfangenen Verkehrsdaten festzustellen, die dem Ort entsprechen, der mit der bestimmten Verbindung verknüpft ist; und,
die Verkehrsdaten beruhend auf den festgestellten gegenwärtigen Fahrzeitinformationen und den festgestellten Ortsinformationen zu identifizieren.

15. Vorrichtung nach Anspruch 14, wobei der Prozessor konfiguriert ist, Verkehrsdaten zu empfangen, die Informationen umfassen, die einer Versionszahl von Informationen entsprechen, die in den Verkehrsdaten wiedergegeben werden, wobei die Versionszahl mit einer spezifischen Syntax der Daten verknüpft ist, wo irgendeine von mehreren Syntaxen verwendet werden kann.

16. Vorrichtung nach Anspruch 14 oder 15, wobei der Prozessor konfiguriert ist, Informationen zu empfangen, die einer Datenlänge der empfangenen Daten entsprechen.

17. Vorrichtung nach einem der Ansprüche 14 bis 16, wobei die gegenwärtigen Fahrzeitinformationen in einer Zeiteinheit wiedergegeben werden, die nicht größer als eine Sekunde ist, und der Zeitbetrag in zwei Bytes (64) enthalten ist.

## Revendications

1. Procédé pour identifier des données de trafic, le procédé comprenant les étapes consistant à :
recevoir les données de trafic comprenant des informations de temps de déplacement actuel pour une liaison particulière, un premier identifiant et des informations de localisation correspondant à une localisation associée à la liaison particulière, et des informations correspondant à une structure de gestion de message (21) comprenant des informations correspondant à un instant de génération de la structure de gestion de message comprenant une pluralité de structures de composant de message, dans lequel chaque structure de composant de message comprend en outre un identifiant spécifique au type d'informations et le premier identifiant est un identifiant, dans une structure de composant de message, spécifique aux informations de temps de déplacement actuel pour la liaison particulière ;
déterminer les informations de temps de déplacement actuel sur la base des informations incluses dans les données de trafic reçues ;
déterminer les informations de localisation sur la base des informations dans les données de trafic reçues correspondant à la localisation associée à la liaison particulière ; et
identifier les données de trafic sur la base des informations déterminées de temps de déplacement actuel et des informations de localisation déterminées.

2. Procédé selon la revendication 1, dans lequel l'étape consistant à déterminer des informations de temps de déplacement actuel comprend les étapes consistant à accéder à des données reçues correspondant à, entre autres, des résultats de mesures réalisées par rapport à un trafic traversant auparavant la liaison, et à calculer une quantité de temps de déplacement sur la base des données reçues.

3. Procédé selon la revendication 1, dans lequel l'étape consistant à déterminer des informations de temps de déplacement actuel comprend les étapes consistant à accéder à des informations fournies au sein des données de trafic reçues et à reconnaître ces données en tant qu'informations de temps de déplacement actuel pour la liaison particulière.

4. Procédé selon l'une quelconque des revendications 1 à 3, dans lequel le temps de génération inclus au sein de la structure de gestion de message reçue est connexe à une pluralité de structures de composant de message qui correspondent à plus d'un élément parmi une tendance de trafic prédite ou actuelle, une quantité prédite ou actuelle de trafic, une vitesse prédite ou actuelle, ou un temps prédit ou actuel pour traverser une liaison particulière.

5. Procédé selon l'une quelconque des revendications 1 à 4, dans lequel les informations de temps de déplacement actuel et les informations de localisation sont déterminées dans une étape unique.

6. Procédé selon l'une quelconque des revendications 1 à 5, dans lequel l'étape consistant à recevoir des informations correspondant aux informations de temps de déplacement actuel comprend les étapes consistant à recevoir une valeur associée à une description de texte d'une quantité de temps de déplacement, et à déterminer, avec la valeur reçue, la description de texte.

7. Procédé selon l'une quelconque des revendications 1 à 6, dans lequel les informations de temps de déplacement actuel sont reflétées dans un nombre de secondes.

8. Procédé selon l'une quelconque des revendications 1 à 6, dans lequel les informations de temps de déplacement actuel sont reflétées dans une unité de temps qui est inférieure à une seconde.

9. Procédé selon l'une quelconque des revendications 1 à 8, dans lequel les informations de temps de déplacement actuel sont reflétées dans un ou plusieurs octets, chaque octet comprenant une première partie de l'octet qui détermine une valeur en minutes et une seconde partie de l'octet, constituée de cinq bits ou moins, qui détermine un nombre de dizaines de secondes.

10. Procédé selon l'une quelconque des revendications 1 à 9, dans lequel l'étape consistant à recevoir les informations de temps de déplacement actuel comprend l'étape consistant à recevoir une valeur indicatrice qui détermine si des données associées sont en une première unité ou une seconde unité.

11. Procédé selon la revendication 10, dans lequel la première unité est en minutes et la seconde unité est en secondes.

12. Procédé selon l'une quelconque des revendications 1 à 11, dans lequel l'étape consistant à recevoir les informations de temps de déplacement actuel comprend l'étape consistant à recevoir une valeur indicatrice qui détermine si des données associées comprendront un ou plusieurs paquets supplémentaires d'informations.

13. Procédé selon la revendication 12, dans lequel la valeur indicatrice indique que les données associées seront distribuées avec un octet supplémentaire unique.

14. Appareil pour identifier des données de trafic, l'appareil comprenant :
une interface configurée pour recevoir les données de trafic comprenant un premier identifiant, des informations correspondant à un temps de déplacement actuel pour une liaison particulière, et des informations de localisation correspondant à une localisation associée à la liaison particulière, et des informations correspondant à une structure de gestion de message (21) comprenant des informations correspondant à un instant de génération de la structure de gestion de message comprenant une pluralité de structures de composant de message, dans lequel chaque structure de composant de message comprend en outre un identifiant spécifique au type d'informations et le premier identifiant est un identifiant, dans une structure de composant de message, spécifique à des informations correspondant au temps de déplacement actuel pour la liaison particulière ; et
un processeur configuré pour :
déterminer les informations de temps de déplacement actuel sur la base des informations incluses dans les données de trafic reçues ;
déterminer les informations de localisation sur la base des informations dans les données de trafic reçues correspondant à la localisation associée à la liaison particulière ; et,
identifier les données de trafic sur la base des informations déterminées de temps de déplacement actuel et des informations de localisation déterminées.

15. Appareil selon la revendication 14, dans lequel le processeur est configuré pour recevoir des données de trafic comprenant des informations correspondant à un numéro de version d'informations reflétées dans les données de trafic, dans lequel le numéro de version est associé à une syntaxe spécifique des données lorsqu'une quelconque parmi de multiples syntaxes peut être utilisée.

16. Appareil selon la revendication 14 ou 15, dans lequel le processeur est configuré pour recevoir des informations correspondant à une longueur de données des données reçues.

17. Appareil selon l'une quelconque des revendications 14 à 16, dans lequel les informations de temps de déplacement actuel sont reflétées dans une unité de temps qui n'est pas supérieure à une seconde, et la quantité de temps est contenue dans deux octets (64).
